# EUROPÄISCHE PATENTSCHRIFT

(11) **EP 1 004 014 B1**
(45) Veröffentlichungstag und Bekanntmachung des Hinweises auf die Patenterteilung: **09.07.2003**
(21) Anmeldenummer: 98948765.7
(22) Anmeldetag: 11.08.1998
(51) Int. Cl.: G01N 21/03, G01N 21/64, G01J 3/44

(54) **VERFAHREN UND VORRICHTUNG ZUR FLUORESZENZKORRELATIONSSPEKTROSKOPIE, INSBESONDERE ZUR MEHRFARBEN-FLUORESZENZKORRELATIONSSPEKTROSKOPIE**
FLUORESCENCE CORRELATION SPECTROSCOPY PROCESS AND DEVICE, IN PARTICULAR FOR POLYCHROMATIC FLUORESCENCE CORRELATION SPECTROSCOPY
PROCEDE ET DISPOSITIF DE SPECTROSCOPIE DE CORRELATION PAR FLUORESCENCE, NOTAMMENT POUR LA SPECTROSCOPIE DE CORRELATION PAR FLUORESCENCE MULTICOLORE

(30) Priorität: 13.08.1997 DE 19735119
(43) Veröffentlichungstag der Anmeldung: 31.05.2000
(73) Patentinhaber: Deutsches Krebsforschungszentrum Stiftung des öffentlichen Rechts, 69120 Heidelberg (DE)
(72) Erfinder: TEWES, Michael, 50354 Hurth (DE); LANGOWSKI, Jörg, D-69120 Heidelberg (DE)
(74) Vertreter: Castell, Klaus, Dr.
(86) Internationale Anmeldenummer: DE9802307
(87) Internationale Veröffentlichungsnummer: WO99009393

(56) Entgegenhaltungen:
- EP-A- 0 106 662
- WO-A-94/16313
- US-A- 4 199 686
- SCHWILLE P ET AL: "DUAL-COLOR FLUORESCENCE CROSS-CORRELATION SPECTROSCOPY FOR MULTICOMPONENT DIFFUSIONAL ANALYSIS IN SOLUTION" BIOPHYSICAL JOURNAL, Bd. 72, Nr. 4, April 1997, Seiten 1878-1886, XP002059917
- VÖLCKER M. ET AL: 'Mikroskopgestützte Fluoreszenz-Photonen-Korrelation' TECHNISCHES MESSEN Bd. 4, 1996, Seiten 128 - 135

## Beschreibung

Die Erfindung betrifft ein Verfahren und eine Vorrichtung zur Fluoreszenzkorrelationsspektroskopie, insbesondere zur Mehrfarben-Fluoreszenzkorrelationsspektroskopie, bei dem Lichtstrahlen in einem transparenten Medium fokussiert werden.

Bei der Mehrfarben-Fluoreszenzkorrelationsspektroskopie (FCS), wie Sie beispielsweise bei P. Schwille et al., Biophysical Journal Bd. 72 (1997), 1878 bis 1886 oder M. Völcker et al. tm - Technisches Messen, 36 (1196, 128 bis 135) beschrieben, werden molekulare Wechselwirkungen untersucht, indem man zwei Reaktionspartner mit unterschiedlichen Fluoreszenzfarbstoffen markiert und sie in einem flüssigen, transparenten Medium frei diffundieren läßt. Die Reaktionspartner erzeugen bei der Diffusion durch den Fokus Fluktuationen der Fluoreszenzintensität, die mit einer konfokalen Optik detektiert werden können. Detektiert man überwiegend korrelierte Intensitätsfluktuationen zwischen den Emmissionswellenlängen der beiden Fluorophore, so deutet dies auf eine Komplexbildung zwischen den beiden Partnern hin.

Wegen der unterschiedlichen Anregungswellenlängen der Fluorophore müssen zwei Laserwellenlängen verwendet werden, die auf ein identisches, möglichst kleines Volumen in der Probe fokussiert werden. Hierzu werden in der Regel Mikroskopobjektive mit hoher numerischer Apertur, d. h. großem Öffnungswinkel verwendet, um einerseits einen möglichst kleinen Fokus zu erzielen und andererseits einen möglichst großen Teil des emittierten Lichts einzusammeln und auf dem Detektor abzubilden.

Bei den verfügbaren Objektiven mit hoher numerischer Apertur ist es jedoch nicht möglich, die Brennpunkte für die unterschiedlichen Wellenlängen vollständig zur Deckung zu bringen. Obwohl die Objektive hoch optimiert sind, ist dies aufgrund der chromatischen Fehler nicht für alle Wellenlängen gleichzeitig möglich. Die bekannten Objektive sind daher für die Mehrfarben-Fluoreszenzkorrelationsspektroskopie nicht brauchbar.

Ein weiterer Nachteil der verfügbaren Objektive liegt darin, daß ein optimaler, beugungsbegrenzter Fokus nur gewährleistet ist, wenn der Brechungsindex des Immersionsmediums und der Probelösung dem Wert entsprechen, für den das Objektiv optimiert wurde. Da die Fluoreszenzkorrelationsspektroskopie sehr empfindlich auf Änderungen des Fokusvolumens reagiert, kann eine Änderung des Brechungsindex die Ergebnisse stark beeinträchtigen. Ursachen für die Änderungen des Brechungsindex sind zum Beispiel Temperaturänderung der Probe oder im Puffer gelöste Salze und somit Parameter, die standardmäßig in biochemischen Experimenten variiert werden. Dieses Problem tritt auch schon bei der Einfarben-Fluoreszenzkorrelationsspektroskopie auf.

Der Erfindung liegt die Aufgabe zugrunde, ein Verfahren und eine Vorrichtung zu entwickeln, die die beschriebenen Nachteile nicht aufweisen.

Diese Aufgabe wird verfahrensmäßig durch ein gattungsgemäßes Verfahren gelöst, bei dem die Lichtstrahlen annähernd senkrecht in das transparente. Medium einfallen und erst innerhalb des transparenten Mediums zum Fokus hin abgelenkt werden.

Der Erfindung liegt die Erkenntnis zugrunde, daß die bekannten Fehler auf der Verwendung von refraktiver Optik basieren. Einfallwinkel und Ausfallwinkel an einer Grenzfläche zwischen zwei Medien sind über das Snellius-Gesetz durch deren Brechungsindizes miteinander verknüpft. Ändern sich die Brechungsindizes aufgrund von Dispersion, d.h. einer Änderung des Brechungsindexes mit der Wellenlänge, oder durch Verwendung anderer Puffer, so ändert sich auch der Strahlengang und damit das Fokusvolumen. Diese Problematik betrifft jeden Strahlengang mit Ausnahme der auf die Grenzfläche senkrecht einfallenden Lichtstrahlen. Nur der auf die Grenzfläche senkrecht einstrahlende Lichtstrahl passiert die Grenzfläche unabhängig von den Brechungsindizes ohne Ablenkung. Diese Erkenntnis führte dazu, daß zur Lösung der Aufgabe in der fokussierenden Anordnung nur reflektive Optik verwendet wurde, und daß sämtliche Lichtstrahlen die Grenzflächen zwischen unterschiedlichen optischen Medien nur senkrecht durchdringen.

Insofern definiert der Begriff "annähernd senkrecht" sich aus der gewünschten Genauigkeit bei der Messung. Im Rahmen einer gewünschten Messgenauigkeit sind Abweichungen möglich.

Das beschriebene Verfahren erlaubt somit eine einfache Optimierung des verwendeten Objektivs und ermöglicht es, Laserstrahlen mit unterschiedlichen Wellenlängen auf ein identisches, möglichst beugungsbegrenztes Volumen innerhalb der Probe zu fokussieren.

Eine verhältnismäßig einfache Umsetzung der Erfindung läßt sich realisieren, wenn die Lichtstrahlen innerhalb des transparenten Mediums zum Fokus hin reflektiert werden.

Vorrichtungsmäßig wird die Aufgabe mit einer gattungsgemäßen Vorrichtung gelöst, bei der das Probegefäß einen fokussierenden, verspiegelten Boden aufweist, wobei der Fokus innerhalb des Probegefäßes liegt. Hierbei kann der Boden derart ausgestaltet sein, daß im Wesentlichen parallel zueinander in das Probegefäß einfallende Lichtstrahlen im Wesentlichen auf den Fokus fokussiert werden.

Diese Vorrichtung erlaubt es, das Probegefäß als fokussierendes Element zu verwenden. Die in das Probegefäß parallel einfallenden Lichtstrahlen werden durch dessen Boden auf einen Punkt fokussiert. Da dieser Punkt innerhalb des Probegefäßes liegt, entsteht keine weitere Ablenkung der parallel einfallenden Lichtstrahlen an den Grenzflächen zwischen zwei Medien. Die Lichtstrahlen müssen nur einmal in die Probe gelangen und da hier parallel und senkrecht einfallende Lichtstrahlen verwendet werden, werden diese beim Durchdringen des Deckglases oder des Übergangs zwischen Deckglas und Probeflüssigkeit nicht abgelenkt. Während der Ablenkung innerhalb der transparenten Probe müssen keine Grenzflächen zwischen unterschiedlichen Medien überwunden werden.

Vorteilhaft ist es, wenn das Probegefäß schalenförmig ist und der Fokus innerhalb der Schale liegt. Eine optimale Bodenform wird dadurch erreicht, daß der Boden parabolisch oder leicht elliptisch geformt ist.

Um ein gutes Meßergebnis zu erzielen wird vorgeschlagen, daß der Boden auf einen Bruchteil der verwendeten Wellenlänge genau gefertigt ist. Die hohe, mit der Vorrichtung erzielbare Präzision fordert auch eine genaue Ausbildung der verspiegelten Bodenfläche.

Um eine langfristige Haltbarkeit der Verspiegelung zu gewährleisten, wird weiterhin vorgeschlagen, daß der Boden mit einer gegenüber üblichen Pufferlösungen resistenten Schicht verspiegelt ist.

Als transparentes Medium kann jedes Material dienen, in dem eine Fluoreszenzkorrelationsspektroskopie durchgeführt werden kann. Insbesondere kann dieses ein transparentes Fluid bzw. eine transparente Flüssigkeit oder ein Gel sein.

Ein Ausführungsbeispiel der erfindungsgemäßen Vorrichtung in Gegenüberstellung zu einer bekannten Vorrichtung ist in der Zeichnung dargestellt und wird im folgenden näher erläutert.

Es zeigt,
- Figur 1: eine schematische Darstellung einer bekannten Vorrichtung zur Mehrfarben-Fluoreszenzkorrelationsspektroskopie und
- Figur 2: eine schematische Darstellung einer erfindungsgemäßen Vorrichtung zur Mehrfarben-Fluoreszenzkorrelationsspektroskopie.

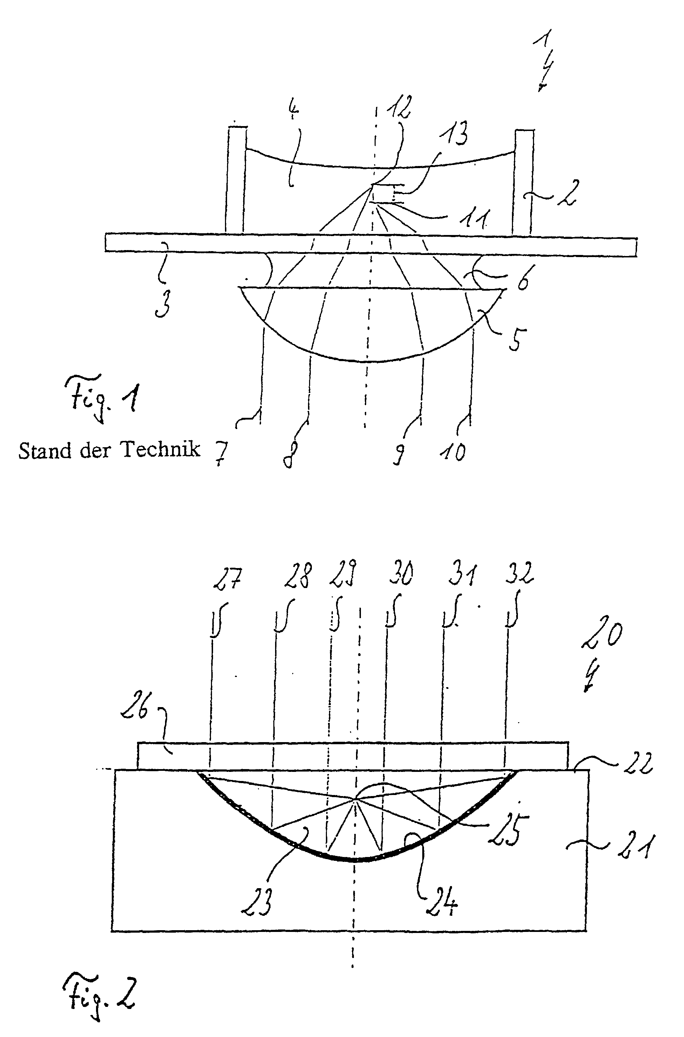

Die in Figur 1 gezeigte Vorrichtung 1 aus dem Stand der Technik besteht aus einer Küvette 2, die auf einem Deckglas 3 steht und in der sich die Probe 4 in Pufferlösung befindet. Unterhalb des Deckglases 3 befindet sich die letzte Linse 5 eines Objektives und zwischen dieser letzten Linse 5 und dem Deckglas 3 befindet sich Immersionsflüssigkeit 6.

Parallele Lichtstrahlen 7, 8, 9, 10 gelangen somit durch das Objektiv 5 in die Immersionsflüssigkeit 6 und gehen weiter durch das Deckglas 3 in die in der Küvette 2 befindliche Pufferlösung 4, wo sie sich in einem Fokus 11 bzw. 12 treffen.

Die unterschiedlichen Wellenlängen der Lichtstrahlen 7, 8 bzw. 9, 10 führen dazu, daß die Strahlen an jeder Grenzfläche zwischen zwei Medien unterschiedlich abgelenkt werden und sich somit in verschiedenen Foki 11 bzw. 12 treffen. Um so größer der Abstand 13 zwischen dem Fokus 11 und dem Fokus 12 ist, um so größer ist die Beeinträchtigung der Messung.

Die beschriebene Vorrichtung zeigt, daß die Lichtstrahlen 7, 8, 9, 10 von Lasern mit unterschiedlichen Laserwellenlängen mehrere Grenzflächen passieren müssen, bis sie sich in einem der Wellenlänge des jeweiligen Lichtstrahls entsprechenden Fokus 11 bzw. 12 treffen. Diese Übergänge führen zu einer starken Beeinträchtigung der Messung.

Die in Figur 2 gezeigte Vorrichtung 20 besteht aus einem Block 21 mit einer planen Oberfläche 22 in die eine Vertiefung 23 als Probegefäß eingearbeitet ist. Dieses Probegefäß hat im Querschnitt die Form einer Parabel und eine verspiegelte Bodenfläche 24, die als Parabolspiegel wirkt. Dieser Parabolspiegel ist so ausgelegt, daß sich der Fokus 25 von parallel einfallenden Lichtstrahlen innerhalb der Vertiefung 23 befindet.

Oberhalb der Vertiefung 23 ist auf die plane Oberfläche 22 des Blocks 21 ein Deckglas 26 aufgelegt, das die mit Probe in Pufferlösung angefüllte Vertiefung 23 abdeckt.

Um die Fokussierung im Punkt 25 zu optimieren, ist der Boden 24 auf einen Bruchteil der Wellenlängen der verwendeten Lichtstrahlen genau gefertigt und das spiegelnde Material ist so auf die Pufferlösungen abgestimmt, daß eine Veränderung des Materials durch die Pufferlösungen oder die Probe unterbleibt.

Bei der Verwendung der erfindungsgemäßen Vorrichtung 20 wird zunächst die Probe mit einer Pufferlösung in die Vertiefung des Blocks 21 gegeben. Die vollständig gefüllte Vertiefung 23 wird anschließend mit dem Deckglas 26 abgedeckt. Dies hat zur Folge, daß parallel einfallende Lichtstrahlen 27, 28, 29, 30, 31, 32 senkrecht die Oberfläche des Deckglases durchdringen, in die in der Vertiefung 23 angeordnete Probe eindringen und durch die Probe hindurch bis auf die Bodenfläche 24 gelangen. Da der Lichtstrahl bis hier jede Grenzfläche zwischen zwei Medien (Luft/Deckglas) und (Deckglas/Probe) senkrecht schneidet, wird er nicht abgelenkt. Erst nach Auftreffen auf die verspiegelte Bodenfläche 24 innerhalb der Probeflüssigkeit werden die Lichtstrahlen 27 bis 32 zum Fokus 25 hin abgelenkt. Da diese Reflektion an der Bodenfläche 24 unabhängig von der Wellenlänge des verwendeten Lichts ist, treffen sich alle Lichtstrahlen 27 bis 32 im Fokus 25, auch wenn die Lichtstrahlen 27 bis 32 verschiedene Wellenlängen aufweisen.

Die Vorrichtung hat somit den Vorteil, daß der parabolisch oder leicht elliptisch geschliffene Spiegel als fokussierendes Element und gleichzeitig als Aufnahme für die Probe dient und somit prinzipiell alle Abbildungsfehler eliminiert werden.

## Patentansprüche

1. Verfahren zur Fluoreszenzkorrelationsspektroskopie, insbesondere zur Mehrfarben-Fluoreszenzkorrelationsspektroskopie bei dem Lichtstrahlen (27 bis 32) in einem transparenten Medium fokussiert werden, ***dadurch gekennzeichnet, daß*** die Lichtstrahlen (27 bis 32) annährend senkrecht in das transparente Medium einfallen und erst des innerhalb des transparenten Mediums zum Fokus (25) hin abgelenkt werden.

2. Verfahren nach Anspruch 1, ***dadurch gekennzeichnet, daß*** die Lichtstrahlen (27 bis 32) innerhalb des transparenten Mediums zum Fokus (25) hin reflektiert werden.

3. Vorrichtung zur Fluoreszenzkorrelationsspektroskopie, insbesondere zur Mehrfarben-Fluoreszenzkorrelationsspektroskopie, die ein Probegefäß (23) aufweist, ***dadurch gekennzeichnet, daß*** das Probegefäß (23) einen fokussierenden, verspiegelten Boden (24) aufweist, wobei der Fokus (25) innerhalb des Probegefäßes (23) liegt.

4. Vorrichtung nach Anspruch 3, ***dadurch gekennzeichnet, daß*** der Boden (24) derart ausgestaltet ist, daß im Wesentlichen parallel zueinander in das Probegefäß (23) einfallende Lichtstrahlen (27 bis 32) im Wesentlichen auf den Fokus (25) fokussiert werden.

5. Vorrichtung nach Anspruch 3 oder 4, ***dadurch gekennzeichnet, daß*** das Probegefäß (23) schalenförmig ist und der Fokus (25) innerhalb der Schalenform liegt.

6. Vorrichtung nach einem der Ansprüche 3 bis 5, ***dadurch gekennzeichnet, daß*** der Boden (24) parabolisch oder elliptisch geformt ist.

7. Vorrichtung nach einem der Ansprüche 3 bis 6, ***dadurch gekennzeichnet, daß*** die Vorrichtung für eine Fluoreszenzkorrelationsspektroskopie in einen bestimmten Wellenlängenbereich ausgebildet ist und der Boden (24) auf einem Bruchteil dieses Wellenlängenbereichs genau gefertigt ist.

8. Vorrichtung nach einem der Ansprüche 3 bis 7, ***dadurch gekennzeichnet, daß*** der Boden (24) mit einer gegen übliche Pufferlösungen resistenten Schicht verspiegelt ist.

## Claims

1. A fluorescence correlation spectroscopy process, in particular, for polychromatic fluorescence correlation spectroscopy, wherein light beams (27-32) are focused in a transparent medium, **characterized by** the fact that the light beams (27-32) are approximately incident into the transparent medium vertically and deflected toward the focal point (25) within the transparent medium.

2. The process according to Claim 1, **characterized by** the fact that the light beams (27-32) are reflected toward the focal point (25) within the transparent medium.

3. A fluorescence correlation spectroscopy device, in particular, for polychromatic fluorescence correlation spectroscopy, wherein said device comprises a sample container (23), **characterized by** the fact that the sample container (23) has a focusing, reflective bottom (24), wherein the focal point (25) lies within the sample container (23).

4. The device according to Claim 3, **characterized by** the fact that the bottom (24) is realized such that light beams (27-32) which are essentially incident into the sample container (23) parallel to one another are essentially focused onto the focal point (25).

5. The device according to Claim 3 or 4, **characterized by** the fact that the sample container (23) has the shape of a bowl, and by the fact that the focal point (25) lies within the bowl.

6. The device according to one of Claims 3-5, **characterized by** the fact that the bottom (24) has a parabolic or elliptic shape.

7. The device according to one of Claims 3-6, **characterized by** the fact that the device is designed for a fluorescence correlation spectroscopy within a certain wavelength range, and by the fact that the bottom (24) is precisely manufactured to a fraction of this wavelength range.

8. The device according to one of Claims 3-7, **characterized by** the fact that the reflective layer on the bottom (24) is resistant to conventional buffer solutions.

## Revendications

1. Procédé de spectroscopie de corrélation par fluorescence, notamment de spectroscopie de corrélation par fluorescence multicolore, par lequel les rayons lumineux (27 à 32) sont focalisés dans un milieu transparent, **caractérisé en ce que** les rayons lumineux (27 à 32) pénètrent approximativement à la verticale dans le milieu transparent et ne sont déviés vers le foyer (25) qu'à l'intérieur du milieu transparent.

2. Procédé selon la revendication 1, **caractérisé en ce que** les rayons lumineux (27 à 32) sont reflétés vers le foyer (25) à l'intérieur du milieu transparent.

3. Dispositif de spectroscopie de corrélation par fluorescence, notamment de spectroscopie de corrélation par fluorescence multicolore, qui présente un vase de test (23) **caractérisé en ce que** le vase de test (23) présente un fond focalisant réflectorisé (24), le foyer (25) se trouvant à l'intérieur du vase de test (23).

4. Dispositif selon la revendication 3, **caractérisé en ce que** le fond (24) est configuré de manière à ce que les rayons lumineux (27 à 32) pénétrant substantiellement parallèlement les uns aux autres dans le vase de test (23) sont substantiellement focalisés vers le foyer (25).

5. Dispositif selon la revendication 3 ou 4, **caractérisé en ce que** le vase de test (23) a une forme de coquille et que le foyer (25) se trouve à l'intérieur de la forme en coquille.

6. Dispositif selon une des revendications 3 à 5, **caractérisé en ce que** le fond (24) a une forme parabolique ou elliptique.

7. Dispositif selon une des revendications 3 à 6, **caractérisé en ce que** le dispositif de spectroscopie de corrélation par fluorescence est constitué dans une certaine plage de longueurs d'ondes et que le fond (24) est réalisé exactement sur une fraction de cette plage de longueurs d'ondes.

8. Dispositif selon une des revendications 3 à 7, **caractérisé en ce que** le fond (24) est réflectorisé au moyen d'une couche résistante aux solutions tampons usuelles.
